# EUROPÄISCHE PATENTSCHRIFT

(11) **EP 3 312 958 B1**
(45) Veröffentlichungstag und Bekanntmachung des Hinweises auf die Patenterteilung: **29.07.2020**
(21) Anmeldenummer: 17197202.9
(22) Anmeldetag: 19.10.2017
(51) Int. Cl.: H02G 3/08, H02G 3/04

(54) **INSTALLATIONSDOSE FÜR DIE ELEKTROINSTALLATION**
INSTALLATION BOX FOR ELECTRICAL INSTALLATION
BOÎTIER D'INSTALLATION POUR L'INSTALLATION ÉLECTRIQUE

(30) Priorität: 24.10.2016 DE 202016105960 U
(43) Veröffentlichungstag der Anmeldung: 25.04.2018
(73) Patentinhaber: f-tronic GmbH, 66131 Saarbrücken (DE)
(72) Erfinder: Fohs, Peter, 66399 Mandelbachtal (DE); Landau, Markus, 57720 Rolbing (FR)
(74) Vertreter: Patentanwaltskanzlei Vièl & Wieske PartGmbB

(56) Entgegenhaltungen:
- DE-B3-102014 108 551
- DE-U1-202014 104 064
- GB-A- 2 531 598
- JP-A- 2002 209 321

## Beschreibung

Die vorliegende Erfindung betrifft eine Installationsdose für die Elektroinstallation nach dem Oberbegriff des Anspruchs 1.

Derartige Installationsdosen sind bekannt und werden insbesondere in der sogenannten Hohlwandinstallation verwendet. Dabei geht es darum, dass Wände in Ständerbauweise errichtet werden, wobei die Wandflächen gebildet werden, indem diese in Ständerbauweise errichteten Tragstrukturen beplankt werden. Diese Beplankung erfolgt üblicherweise mit Gipskartonplatten.

Es ist weiterhin bekannt, in diese Beplankungen Öffnungen einzubringen, in die Installationsdosen von der Sichtseite der Beplankung eingeführt werden. Die Installationsdosen werden befestigt, indem diese sogenannte Spannbratzen aufweisen. Dabei handelt es sich um Riegelelemente, die mittels einer Spannschraube angezogen werden. Die Spannschrauben sind durch Öffnungen im Randbereich der Installationsdose geführt. Die Spannbratzen sind zum Einsetzen der Installationsdosen so an die Außenseite der Installationsdose angelegt, dass diese nicht seitlich über den Umfang der Installationsdose hinausstehen. Werden nach dem Einsetzen der Installationsdose die Spannschrauben angezogen, werden dadurch die Spannbratzen so gedreht, dass diese über den Umfang der Installationsdose herausstehen. Durch das Anziehen der Spannschrauben werden die Spannbratzen auf die Rückseite der Beplankung gezogen und hintergreifen somit diese Beplankung. Die Installationsdose weist weiterhin einen Kragen auf, der auf der Sichtseite der Beplankung im Randbereich der Öffnung der Beplankung aufliegt. Durch das Zusammenwirken der über die Spannschrauben angezogenen Spannbratzen mit dem aufliegenden Kragen wird die Installationsdose befestigt.

Bei diesen Wänden in Ständerbauweise ergibt sich ein Problem bei der Brandschutzklassifizierung. Üblicherweise werden die Beplankungen als Doppelbeplankung zweier übereinander angeordneter Gipskartonplatten ausgeführt. Diese Wände haben dann eine Feuerfestigkeitsklasse F90. Problematisch ist dabei, dass die Öffnungen, die in die Beplankung eingebracht werden, diese Feuerfestigkeitsklasse nicht haben. Insbesondere können sich in der Hohlwand Brände ausbreiten, wobei die Flammen aus den Öffnungen der Beplankung heraustreten können.

Dies erweist sich als besonders problematisch bei der Montage von Lichtschaltern. Diese werden in genormten Höhen mit einem genormten seitlichen Abstand zu einem Türrahmen montiert. Wird eine solche Wand in Ständerbauweise zur Trennung von zwei Räumen errichtet derart, dass in diese Wand eine Türöffnung eingebracht wird, ergibt sich, dass die Sollpositionen für die Lichtschalter in der Wand neben der Türöffnung genau "Rücken an Rücken" angeordnet sind.

Dies ermöglicht ein Übergreifen eines Feuers in einem der Räume auf den anderen Raum. Die Flammen können durch die eine Öffnung für den Lichtschalter in der Beplankung aus dem Raum, in dem das Feuer entstanden ist, in die Hohlwand hineintreten. Diese Flammen können besonders leicht direkt durch die Öffnung in der gegenüberliegenden Beplankung für den Lichtschalter in dem benachbarten Raum wieder aus der Hohlwand heraus in den benachbarten Raum eindringen. Dadurch wird eine Ausbreitung eines Feuers begünstigt.

Zur Lösung dieses Problems ist es bekannt, eine Hohlwanddose so auszubilden, dass diese entweder vollständig aus intumeszierendem Material besteht oder eine Beschichtung aus einem solchen intumeszierenden Material aufweist.

Es ist ebenso bekannt, Pads aus intumeszierendem Material vorzusehen und diese in eine herkömmliche Hohlwanddose einzulegen.

Das bekannte intumeszierende Material besteht aus einem Blähgraphit. Dieser Blähgraphit hat die Eigenschaft, sich bei Hitze auszudehnen. Diese Ausdehnung erfolgt mit solchen Kräften, dass dabei die Struktur einer herkömmlichen Hohlwanddose zerstört wird. Der Blähgraphit dehnt sich bei der Anwendung im Zusammenhang mit der Elektroninstallationsdose so aus, dass die Öffnung der Elektroinstallationsdose durch das intumeszierende Material verschlossen wird.

Durch dieses Verschließen der Öffnung durch das intumeszierende Material kann vorteilhaft der eingangs beschriebene Austritt von Flammen aus den Öffnungen in der Beplankung verhindert werden. Das intumeszierende Material hat sich durch die Hitzeentwicklung bereits ausreichend ausgedehnt, wenn die Flammen in die Nähe der Öffnung in der Beplankung kommen.

Es werden auch Brandschutzdosen mit dem intumeszierenden Material vorgesehen bei der Unterputz-Montage insbesondere bei dünnen Wänden, die beispielsweise eine Wandstärke von 100 mm aufweisen. Auch bei diesen dünnen Wänden kann es sich ergeben, dass beispielsweise Lichtschalter in benachbarten Räumen derart installiert werden, dass deren Installationsdosen "Rücken an Rücken" in einer Bohrung in der Wand angeordnet sind. Die Installationsdosen selbst werden mit den bekannten Spreizkrallen über die Installationsdose in der Wand befestigt oder mit den Montageschrauben in der Installationsdose befestigt. Durch diese Montage "Rücken an Rücken" bei dünnen Wänden kann es ebenfalls dazu kommen, dass sich ein Brand aus einem Raum durch die Installationsdosen in den Nachbarraum ausbreitet. Die Installationsdosen als Brandschutzdosen mit intumeszierendem Material sind daher nicht auf die Hohlwandinstallation beschränkt, sondern können auch bei Unterputzinstallationen zur Anwendung kommen.

Es wird weiterhin auf die GB 2 531 598 A verwiesen. Bei diesem Stand der Technik bildet das intumeszierende Material eine Schicht für sich, die auf beiden Seiten eingebettet ist zwischen jeweils einer anderen Schicht. Es ist dann noch auf beiden Seiten jeweils eine weitere Schicht vorhanden, mit der dieser (bereits dreischichtige) Layer überdeckt wird. Dieses Material soll dann bei der Montage auf eine Installationsdose aufgesetzt bzw. in eine solche Installationsdose eingesetzt werden.

Der vorliegenden Erfindung liegt die Ausgabe zu Grunde, eine einfache Lösung für eine Installationsdose mit einer Brandschutzwirkung vorzuschlagen.

Diese Aufgabe wird gemäß Anspruch 1 gelöst durch eine Installationsdose, die eine Schicht aus einem elektrisch isolierenden Kunststoff aufweist. Diese Schicht weist Öffnungen auf für die Einführung von Kabeln und/oder Leerrohren. Auf der Außenfläche der Schicht ist weiterhin eine Schicht aus einem weichelastischen Material angebracht. Dabei überdeckt das weichelastische Material zumindest diese Öffnungen. Nach der vorliegenden Erfindung ist das weichelastische Material ein Stoff mit einer Materialzusammensetzung, die wenigstens ein intumeszierendes Material umfasst. Dabei weist das weichelastische Material einen Materialbestandteil aus weichelastischem Material auf sowie einen Materialbestandteil aus intumeszierendem Material. Kabel oder Leerrohre sind durch das weichelastische Material durchschiebbar.

Dadurch wird vorteilhaft erreicht, dass die Installationsdose auch im montierten Zustand bei eingeführten Kabeln oder Leerrohren die Öffnung in der Beplankung abdichtend abschließt. Die Kabel oder Leerrohre werden durch das weichelastische Material hindurchgeschoben. Dabei umschließt das weichelastische Material die eingeführten Kabel bzw. Leerrohre abdichtend. Dies ist bereits bekannt im Zusammenhang mit Hohlwanddosen, die am Markt erhältlich sind. Diese Hohlwanddosen werden dabei in dem Bereich der Hohlwanddose, in dem sich die Öffnungen für die Einführung der Kabel bzw. Leerrohre befinden, flächig mit dem weichelastischen Material überzogen, so dass damit auch die Öffnungen mit dem weichelastischen Material überdeckt werden.

Dies erweist sich insofern als besonders vorteilhaft, als bei auftretenden Feuern die Entwicklung und Verbreitung der Rauchgase eine erhebliche Gefährdung für die Personen darstellt. Bei Feuern in Gebäuden kommen Personen in erheblichem Umfang durch diese Rauchgase zu Schaden (bis hin zu Todesfällen), auch wenn diese Personen nicht unbedingt direkt Verbrennungen durch das Feuer erleiden.

Insofern erweist sich die Abdichtung der Öffnungen - auch wenn durch diese Öffnungen Kabel bzw. Leerrohre eingeführt worden sind - durch das weichelastische Material als vorteilhaft. Durch diese Abdichtung wird verhindert, dass Rauchgase, die sich zwischen Beplankungen einer Wand in Ständerbauweise ausbreiten, durch die Installationsdosen in einen Raum hinein austreten können. Entsprechendes gilt auch für die beschriebene Situation bei der Unterputzinstallation bei dünnen Wänden. Hier stellt sich das Problem, dass die Rauchgase von einem Raum eines Gebäudes in einen benachbarten Raum übertreten können, wenn eine entsprechende durchgehende Öffnung in der Wand ist. Durch die Abdichtung der Installationsdose wird verhindert, dass diese Rauchgase durch die Installationsdose hindurch in einen Raum eindringen können.

Die besonders vorteilhafte Schutzwirkung der Installationsdose ergibt sich durch die zusammenwirkende Schutzfunktion der weichelastischen Materialbestandteile und des intumeszierenden Materials in dem weichelastischen Material.

Die weichelastischen Materialbestandteile weisen für sich allein eine geringere Temperaturbeständigkeit auf als das intumeszierende Material. Die Temperaturbeständigkeit des intumeszierenden Materials betrifft dabei die Temperatur, bei der die intumeszierende Wirkung des Materials einsetzt. Unterhalb dieser Temperatur dichtet das weichelastische Material die Öffnung in der Beplankung ab. Wenn diese Temperatur erreicht bzw. überschritten ist, lösen sich die weichelastischen Materialbestandteile in dem weichelastischen Material auf in der Weise, dass diese weichelastischen Materialbestandteile flüssig werden. Durch die intumeszierenden Materialbestandteile in dem weichelastischen Material behält das weichelastische Material insgesamt noch derart weitgehend seine Form, dass bei einem weiteren Temperaturanstieg bis zu der Temperatur, bei der die intumeszierende Wirkung des intumeszierenden Materials einsetzt, sich dann das intumeszierende Material entsprechend ausdehnt.

Es erweist sich als vorteilhaft, dass das weichelastische Material insgesamt durch das intumeszierende Material als Bestandteil des weichelastischen Materials eine ausreichende hohe Zähigkeit aufweist, so dass das weichelastische Material - und damit auch das intumeszierende Material als Bestandteil des weichelastischen Materials - sich bei Erreichen der Temperatur, bei der sich das intumeszierende Material ausdehnt, noch an dem Ort befindet, an dem das intumeszierende Material die Öffnungen in der Dose verschließen soll und auch die Dose insgesamt abdichten soll.

Vorteilhaft wird dadurch die Öffnung in der Beplankung durch das intumeszierende Material verschlossen. Dies gilt ebenso für die Bohrung in der dünnen Wand, in die die Installationsdosen in Unterputz-Montage eingebaut sind. Dadurch wird der Austritt von Flammen verhindert. Dies gilt ebenso für den Austritt von Rauchgasen, der durch das intumeszierende Material ebenfalls verhindert oder zumindest erheblich reduziert wird.

Bei der Ausdehnung des intumeszierenden Materials sorgt dieses Material für eine Formstabilisierung des weichelastischen Materials, weil das Gesamtvolumen des weichelastischen Materials nach der Ausdehnung des intumeszierenden Materials von diesem intumeszierenden Material dominiert und bestimmt wird. Dass sich der weichelastische Materialbestandteil des weichelastischen Materials dann verflüssigt, spielt für die Stabilität des dann bereits ausgedehnten intumeszierenden Materials praktisch keine Rolle mehr.

Vorteilhaft wird durch die Ausgestaltung nach der vorliegenden Erfindung bereits in der Anfangsphase der Ausbreitung des Brandes durch die dann bereits bestehende Wirkung der Abdichtung der Öffnungen in der Installationsdose durch das weichelastische Material der Austritt der Rauchgase durch die abdichtende Wirkung verhindert. Diese Wirkung bleibt zumindest weitgehend bestehen, bis sich das intumeszierende Material ausdehnt. Dies erweist sich als vorteilhaft, weil sich Personen dadurch in Sicherheit bringen können, ohne dass sie durch Rauchgase geschädigt werden.

Die unterschiedlichen Temperaturbeständigkeiten der weichelastischen Materialbestandeile sowie des intumeszierenden Materials in dem weichelastischen Material erweisen sich bei der Herstellung der Installationsdose als vorteilhaft.

Die Installationsdose kann zunächst mit der inneren Schicht aus einem herkömmlich verwendeten Kunststoff für die Herstellung von Installationsdosen hergestellt werden.

Es wird dann möglich, in einem einzigen weiteren Arbeitsschritt das weichelastische Material aufzubringen, das einen weichelastischen Materialbestandteil aufweist sowie wenigstens ein intumeszierendes Material.

Wegen der Temperatureigenschaften des weichelastischen Materialbestandteils kann das weichelastische Material als Überzug zumindest in einem Teilbereich der Installationsdose aufgebracht werden, in dem sich die Öffnungen für die Einführung der Kabel bzw. Leerrohre befinden. Dabei liegt die Temperatur des weichelastischen Materials bei der Herstellung dieses Überzugs unter der Temperatur, bei der die intumeszierende Wirkung des intumeszierenden Materials einsetzt, aber oberhalb der Temperatur, bei die die weichelastischen Materialbestandteile in dem weichelastischen Material flüssig oder zumindest zähflüssig sind.

Dadurch wird die Installationsdose herstellbar mit einem gut handhabbaren Aufwand bei der Steuerung bzw. Regelung der Temperatur der Materialien bei der Herstellung der Installationsdose. Insbesondere kann die Temperatur des weichelastischen Materials bei der Herstellung der Installationsdose so gesteuert bzw. geregelt werden, dass diese Temperatur unterhalb der Temperatur liegt, bei der die intumeszierende Wirkung des intumeszierenden Materials einsetzt. Dadurch wird der weichelastische Materialbestandteil in dem weichelastischen Material zum "Träger" für das intumeszierende Material, das damit gemeinsam mit dem weichelastischen Materialbestandteil in einer Schicht eines weichelastischen Materials aufgetragen werden kann. Entsprechend der sich insgesamt ergebenden Zähigkeit des weichelastischen Materials kann dieses beispielsweise mechanisch auf der äußeren Oberfläche der Installationsdose verteilt werden. Es ist auch möglich, die Installationsdose in ein entsprechendes Bad eines weichelastischen Materials einzutauchen und eventuell zu viel anhängendes Material wieder abzustreichen.

Die Dose nach Anspruch 1 hat gegenüber anderen bekannten Brandschutzdosen zusätzlich noch den Vorteil, dass die Dose winddicht und schallisolierend ist. Weiterhin werden die Kabel bzw. Leerrohre beim Einführen in die Installationsdose durch die membranartige Wirkung des weichelastischen Materials gehalten. Diese Vorteile geltend insbesondere für die Hohlwandinstallation.

Bei den aus dem Stand der Technik bekannten Brandschutzdosen sind die Positionen für die Einführung von Kabeln und / oder Leerrohren in diese Installationsdosen als Flächen vorgesehen, durch die die Installationsdose weitergehender geöffnet wird, als dies dem Durchmesser der Kabel bzw. der Leerrohre entspricht. Diese Öffnungen können als Ausbrechflächen mit einer Sollbruchlinie an deren Außenumfang ausgebildet sein. Ebenso können diese Öffnungen aus der Installationsdose ausgeschnitten werden. Dadurch können bei diesen bekannten Brandschutzdosen Rauchgase durch die Brandschutzdose aus der Beplankung (Hohlwandinstallation) bzw. durch eine dünne Wand (Unterputzinstallation bei einer dünnen Wand) hindurch in einen Raum hineingelangen, wenn sich das Feuer noch in der Anfangsphase befindet, so dass das intumeszierende Material sich noch nicht ausdehnt.

Es ist vorteilhaft, bei den Brandschutzdosen darauf zu achten, dass die äußeren Abmessungen der Dose so bleiben, dass diese dem Normmaß entspricht. Dieses Normmaß entspricht einem Außendurchmesser von 68 mm. Es erweist sich hierbei als vorteilhaft, dass bereits eine vergleichsweise dünne Schichtdicke des weichelastischen Materials ausreichend ist für die beschriebenen vorteilhaften Wirkungen des weichelastischen Materials sowohl hinsichtlich der Abdichtung als auch hinsichtlich der Wirkungen des intumeszierenden Materials. Dies erweist sich insofern als vorteilhaft, weil dadurch der innere Einbauraum der Installationsdose ausreichend groß bleibt.

Das weichelastische Material kann eine Schichtdicke von einem mm bis hin zu mehreren mm aufweisen und insbesondere zwischen einem mm und fünf mm liegen.

Die Innenseite der Installationsdose hat auch in dem Bereich der Öffnungen für die Einführung von Kabeln oder Leerrohren einen ausreichend geringen elektrischen Leitwert, so dass die Dose insgesamt eine ausreichende Spannungsfestigkeit für die Installationen aufweist. Dies liegt insbesondere daran, dass durch den weichelastischen Materialbestandteil in dem weichelastischen Material der elektrische Leitwert des weichelastischen Materials insgesamt reduziert wird gegenüber dem elektrischen Leitwert des intumeszierenden Materials.

Es erweist sich bei der Befestigung von elektrischen bzw. elektronischen Elementen bei der Unterputz-Montage im Zusammenhang mit der vorliegenden Erfindung als vorteilhaft, die Befestigung der Elemente nicht mittels der Spreizkrallen vorzunehmen sondern diese Elemente mittels der Befestigungsschrauben am Außenumfang der Dose zu befestigen. Diese Befestigung ist im Rahmen der vorliegenden Erfindung besonders bevorzugt, weil dabei vermieden wird, dass die Spreizkrallen sich durch die Installationsdose drücken und damit die geschlossene Oberfläche der Installationsdose zerstört wird. Durch diesen Bereich der Installationsdose könnten bei einem Brand wiederum Rauchgase hindurchtreten.

Das weichelastische Material kann lediglich in einem Teilbereich der äußeren Oberfläche auf der Installationsdose aufgebracht sein oder vollständig auf der gesamten äußeren Oberfläche der Installationsdose.

Anspruch 2 betrifft eine Ausgestaltung einer Installationsdose für die Elektroinstallation, bei der das weichelastische Material derart aufgebaut ist, dass das intumeszierende Material als Materialpartikel in ein weichelastisches Elastomer eingebunden ist.

Hierbei erweist es sich als vorteilhaft, dass das weichelastische Elastomer bei der Herstellung als Träger für die Materialpartikel des intumeszierenden Materials dient.

Dies erweist sich gegenüber einer sehr feinkörnigen Mischung der Materialbestandteile als vorteilhaft, weil damit statistisch die Materialpartikel des intumeszierenden Materials umhüllt sind von dem elektrisch isolierenden weichelastischen Elastomer.

Dadurch besteht vorteilhaft ein ausreichend geringer elektrischer Leitwert des weichelastischen Materials, um dieses als Material für die Herstellung von Installationsdosen für die Elektroinstallation verwenden zu können.

Bei der Ausgestaltung einer Installationsdose nach Anspruch 3 beträgt der Volumenanteil der Materialpartikel des intumeszierenden Materials am Volumen des weichelastischen Materials zwischen 15 % und 90 %.

Dies erweist sich als vorteilhaft im Hinblick auf die bereits beschriebenen Eigenschaften des weichelastischen Materials als Materialgemisch eines weichelastischen Materialbestandteils mit wenigstens einem intumeszierenden Material.

Durch den entsprechenden Anteil des intumeszierenden Materials bleibt die das weichelastische Material bei der Herstellung der Installationsdose ausreichend gut verarbeitbar. Im Gebrauch ergeben sich die vorteilhaften Wirkungen des weichelastischen Materials hinsichtlich einer Zugentlastung sowie einer Abdichtung im Hinblick auf Schallschutz und Wärmeisolation.

Im Falle eines Feuers ergeben sich die beschriebenen Vorteile der Abdichtung gegen die Rauchgase sowie eine ausreichende intumeszierende Wirkung des Materials.

Dies gilt insbesondere bei einer Schichtdicke des weichelastischen Materials zwischen einem mm und fünf mm.

Als besonders vorteilhaft hat sich in diesem Zusammenhang ein Volumenanteil des intumeszierenden Materials im weichelastischen Material zwischen 30 % und 70 % erwiesen, insbesondere zwischen 40 % und 60 %.

Es zeigt sich außerdem, dass das weichelastische Material der Installationsdose einen ausreichend geringen elektrischen Leitwert κ hat.

Dadurch ist das weichelastische Material vorteilhaft verwendbar als Material zur Herstellung von Installationsdosen für die Elektroinstallation.

Der ausreichend geringe elektrische Leitwert lässt sich insbesondere erreichen durch den Aufbau des weichelastischen Materials aus Materialpartikeln des intumeszierenden Materials, die in ein weichelastisches Material eingebettet werden. Zu beachten ist dabei weiterhin der Volumenanteil des intumeszierenden Materials im weichelastischen Material.

Bei der Ausgestaltung der Installationsdose nach Anspruch 4 weist die Installationsdose in dem Bereich, in dem die Installationsdose bei einer Hohlwandinstallation an der Beplankung der Wand anliegt bzw. an der Raumseite der Wand, in die die Installationsdose in Unterputz-Montage montiert wird, und / oder in dem Bereich, in dem die Installationsdose durch eine Öffnung in der Beplankung hindurchgeführt ist bzw. in dem Bereich des Außenumfangs der Installationsdose, der bei einer Unterputz-Montage an der zylinderförmigen Wandausnehmung im vorderen Bereich des Bohrloches anliegt, eine Abdichtung aus weichelastischem Material auf, wobei das weichelastische Material der Abdichtung ein Stoff mit einer Materialzusammensetzung ist, die wenigstens ein intumeszierendes Material umfasst.

Dadurch wird vorteilhaft erreicht, dass die abdichtende Wirkung des weichelastischen Materials zu Beginn eines sich entwickelnden Brandes nicht nur die Dose als solche abdichtet sondern weiterhin auch den Bereich zwischen der Installationsdose und der Wand. Damit wird vermieden, dass die Rauchgase zwischen der Installationsdose und dem Randbereich der Öffnung zum Einbau der Installationsdose in der Beplankung bzw. in der Wand austreten können.

Wenn sich das weichelastische Material in Folge der Wärmeentwicklung so verformt bzw. verflüssigt, dass dieses seine abdichtende Wirkung verliert, setzt die Wirkung des intumeszierenden Materials ein derart, dass dieses intumeszierende Material die Öffnung in der Beplankung verschließt.

Es erweist sich bei der Ausgestaltung nach Anspruch 4 noch als vorteilhaft, wenn das weichelastische Material in den genannten Bereichen als Dichtlippe ausgestaltet oder in anderer Ausgestaltung (beispielsweise durch einen Materialauftrag als Wulst oder Schlauch) derart verformbar ist, dass dieses weichelastische Material bei der Montage der Installationsdose den Randbereich abdichtet.

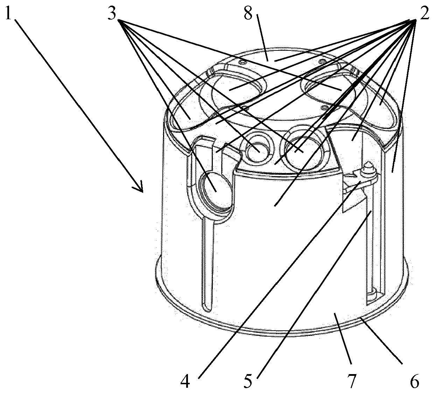

Ein Ausführungsbeispiel der Erfindung ist in der Zeichnung dargestellt. Die einzige Figur zeigt eine Installationsdose 1 für die Hohlwandinstallation.

In dem dargestellten Ausführungsbeispiel ist zu sehen, dass der Bereich, der sich um die Öffnungen 3 erstreckt, insgesamt von einem weichelastischen Material 2 überzogen ist. Es handelt sich dabei um den gesamten Bodenbereich der Installationsdose 1. Dieses weichelastische Material 2 verschließt somit die Öffnungen 3. Allerdings kann dieses weichelastische Material 2 beim Einführen von Kabeln bzw. Leerrohren in die Installationsdose 1 einfach von den Kabeln bzw. den Leerrohren durchstoßen werden. Das weichelastische Material 2 liegt dann abdichtend an den eingeführten Kabeln bzw. Leerrohren an. Zu diesem Bodenbereich gehört der Boden 8 der Installationsdose, die schräg verlaufende Fläche im Übergang vom Boden 8 zur zylinderförmigen Wand der Installationsdose sowie der Teil der zylinderförmigen Wand, der sich direkt an diese schräg verlaufende Fläche im Übergang vom Boden 8 zur zylinderförmigen Wand an diese schräg verlaufende Fläche anschließt.

Es ist weiterhin eine der Spannbratzen 4 mit der zugehörigen Spannschraube 5 zu sehen.

Alternativ zur Darstellung der Figur ist es auch möglich, dass das weichelastische Material 2 nicht nur den Bodenbereich der Installationsdose 1 überdeckt sondern die gesamte äußere Oberfläche der Installationsdose 1.

Ebenso kann im Bereich der Fläche der Schulter 6, mit der die eingesetzte Installationsdose 1 an der Sichtseite der Beplankung anliegt, und / oder des Kragens 7, der bei eingesetzter Installationsdose an der Innenseite der Öffnung in der Beplankung anliegt, noch eine Abdichtung aus weichelastischem Material aufweisen.

Das weichelastische Material ist im Sinne der vorliegenden Erfindung eine Materialzusammensetzung aus einem weichelastischen Materialbestandteil sowie wenigstens einem intumeszierenden Material.

Um eine gute Wirkung des intumeszierenden Materials zu erreichen, kann vorgesehen sein, dass das weichelastische Material direkt auf der Außenseite des Bodens 8 der Installationsdose 1 in dem Bereich, in dem sich keine der Öffnungen 3 befindet, mit einer größeren Schichtdicke aufgetragen wird. Dadurch wird erreicht, dass eine ausreichende Menge des intumeszierenden Materials vorhanden ist. Dennoch wird erreicht, dass der zur Verfügung stehende Einbauraum in der Installationsdose zumindest weitgehend unbeeinträchtigt bleibt. Dies wird erreicht, indem die Schichtdicke des weichelastischen Materials unmittelbar zur Überdeckung der Öffnungen 3 sowie - soweit dort überhaupt vorhanden - auch im Bereich der äußeren Oberfläche der Zylindermantelfläche der Installationsdose mit geringerer Schichtdicke ausgeführt wird.

## Patentansprüche

1. Installationsdose (1) für die Elektroinstallation,
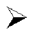 wobei die Dose eine Schicht aus einem elektrisch isolierenden Kunststoff aufweist,
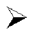 wobei diese Schicht Öffnungen (3) für die Einführung von Kabeln und/oder Leerrohren aufweist
und
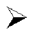 wobei auf der Außenfläche der Schicht weiterhin eine Schicht eines weichelastischen Materials (2) angebracht ist,
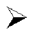 wobei das weichelastische Material zumindest diese Öffnungen (3) überdeckt, wobei das weichelastische Material ein Stoff mit einer Materialzusammensetzung ist, die wenigstens ein intumeszierendes Material umfasst,
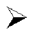 **dadurch gekennzeichnet, dass** das weichelastische Material einen Materialbestandteil aus weichelastischem Material aufweist sowie einen Materialbestandteil aus intumeszierendem Material,
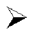 wobei Kabel oder Leerrohre durch das weichelastische Material durchschiebbar sind.

2. Installationsdose (1) nach Anspruch 1,
**dadurch gekennzeichnet, dass** das intumeszierende Material als Materialpartikel in ein weichelastisches Elastomer eingebunden ist.

3. Installationsdose (1) nach Anspruch 2,
**dadurch gekennzeichnet, dass** der Volumenanteil der Materialpartikel des intumeszierenden Materials am Volumen des weichelastischen Materials zwischen 15 % und 90 % beträgt.

4. Installationsdose nach einem der vorhergehenden Ansprüche,
**dadurch gekennzeichnet, dass** die Installationsdose (1) in dem Bereich (7), in dem die Installationsdose bei einer Hohlwandinstallation an der Beplankung der Wand anliegt bzw. an der Raumseite der Wand, in die die Installationsdose in Unterputz-Montage montiert wird, und / oder in dem Bereich (8), in dem die Installationsdose durch eine Öffnung in der Beplankung hindurchgeführt ist bzw. in dem Bereich des Außenumfangs der Installationsdose, der bei einer Unterputz-Montage an der zylinderförmigen Wandausnehmung im vorderen Bereich des Bohrloches anliegt, eine Abdichtung aus weichelastischem Material aufweist, wobei das weichelastische Material der Abdichtung ein Stoff mit einer Materialzusammensetzung ist, die wenigstens ein intumeszierendes Material umfasst.

## Claims

1. Installation box (1) for electrical installation,
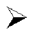 wherein the box comprises a layer made of an electrically insulating plastics material,
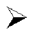 wherein said layer comprises openings (3) for introducing cables and/or ductwork,
and
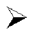 wherein a layer of flexible material (2) is furthermore attached to the outside surface of the layer,
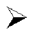 wherein the flexible material covers at least said openings (3),
wherein
the flexible material is a substance having a material composition that comprises at least one intumescent material,
**characterised in that**
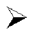 the flexible material comprises a material component of flexible material, and a material component of intumescent material,
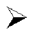 wherein cables or ductwork can be pushed through the flexible material.

2. Installation box (1) according to claim 1,
**characterised in that** the intumescent material is incorporated, as material particles, into a flexible elastomer.

3. Installation box (1) according to claim 2,
**characterised in that** the volume fraction of the material particles of the intumescent material is between 15% and 90% of the volume of the flexible material.

4. Installation box according to any of the preceding claims,
**characterised in that**, in the region (7) in which the installation box rests on the covering of the wall or on the room side of the wall in which the installation box is fitted in a flush-mounted manner, in the case of cavity wall installation, and/or in the region (8) in which the installation box is guided through an opening in the covering or in the region of the external periphery of the installation box which, in the event of flush-mounted fitting, rests on the cylindrical wall recess in the front region of the drill hole, the installation box (1) comprises a seal made of flexible material, wherein the flexible material of the seal is a substance having a material composition which comprises at least one intumescent material.

## Revendications

1. Boîtier d'installation (1) pour installation électrique,
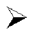 le boîtier comprenant une couche réalisée dans une matière plastique électriquement isolante,
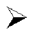 cette couche comprenant des ouvertures (3) pour l'introduction de câbles et/ou de gaines,
et
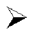 une couche réalisée dans un matériau élastique souple (2) étant en outre appliquée sur la surface extérieure de la couche,
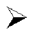 le matériau élastique souple recouvrant au moins ces ouvertures (3), le matériau élastique souple étant un matériau dont la composition comprend au moins un matériau intumescent,
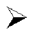 **caractérisé en ce que** le matériau élastique souple comprend un composant de matériau sous forme d'un matériau élastique souple ainsi qu'un composant de matériau sous forme d'un matériau intumescent,
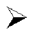 des câbles ou des gaines pouvant être passés à travers le matériau élastique souple.

2. Boîte d'installation (1) selon la revendication 1, **caractérisée en ce que** le matériau intumescent est incorporé sous forme de particule de matériau dans un élastomère élastique souple.

3. Boîte d'installation (1) selon la revendication 2, **caractérisée en ce que** la fraction volumique des particules de matériau du matériau intumescent dans le volume du matériau élastique souple est comprise entre 15 % et 90 %.

4. Boîtier d'installation selon l'une des revendications précédentes, **caractérisé en ce que** le boîtier d'installation (1) est muni d'un joint d'étanchéité dans la zone (7) dans laquelle le boîtier d'installation, dans le cas d'une installation sur mur creux, s'applique contre le revêtement du mur ou du côté du mur situé dans la pièce dans lequel le boîtier d'installation est monté selon un montage encastré, et/ou dans la zone (8) dans laquelle le boîtier d'installation est passé à travers une ouverture dans le revêtement ou dans la zone de la circonférence extérieure du boîtier d'installation qui, dans le cas d'un montage encastré, s'appuie sur l'évidement mural cylindrique dans la zone avant du logement, lequel joint d'étanchéité étant réalisé dans un matériau élastique souple, lequel matériau élastique souple du joint d'étanchéité étant un matériau dont la composition comprend au moins un matériau intumescent.
